# EUROPEAN PATENT APPLICATION

(11) **EP 4 852 399 A1**
(43) Date of publication of application: **09.12.2026**
(21) Application number: 25760730.9
(22) Date of filing: 07.02.2025
(51) Int. Cl.: H04L 49/111

(54) **COMMUNICATION SYSTEM, METHOD FOR UPDATING OPERATING SYSTEM, AND LINE CARD**

(30) Priority: 29.02.2024 CN 202410234714
(71) Applicant: HUAWEI TECHNOLOGIES CO., LTD., Shenzhen, Guangdong 518129 (CN)
(72) Inventor: XIE, Jiangfan, Shenzhen, Guangdong 518129 (CN); CAO, Zisheng, Shenzhen, Guangdong 518129 (CN)
(74) Representative: Huawei European IPR
(86) International application number: PCT/CN2025/076219
(87) International publication number: WO 2025/180186

(57) **Abstract**

This application provides a communication system, a method for updating an operating system, and a line card, and is applied to the communication field. The communication system includes a main board, a first line card, and a second line card. The main board is configured to send a first forwarding information base to the first line card. The first line card includes an NP and a CPU. The NP is configured to receive the first forwarding information base and replace a second forwarding information base. The NP is further configured to: receive a first upward packet and forward the first upward packet to the second line card based on the first forwarding information base. The second line card is configured to forward the first upward packet to the main board. The first line card is configured to update an operating system of the CPU. After the operating system is updated, the first line card is configured to: receive a second upward packet by using the NP, and forward the second upward packet to the main board based on the second forwarding information base and an updated operating system. In the technical solutions provided in this application, an NP on a line card and another line card are used to forward an upward packet without interrupting transmission of the upward packet, thereby improving user experience.

## Description

This application claims priority to Chinese Patent Application No. 202410234714.2, filed with the China National Intellectual Property Administration on February 29, 2024 and entitled "COMMUNICATION SYSTEM, METHOD FOR UPDATING OPERATING SYSTEM, AND LINE CARD", which is incorporated herein by reference in its entirety.

### TECHNICAL FIELD

This application relates to the communication field, and in particular, to a communication system, a method for updating an operating system, and a line card.

### BACKGROUND

A distributed network system generally includes a main board (main board, MB) and a plurality of line cards (line cards, LCs). To improve user experience, the distributed network system needs to make upgrading imperceptible to external users. Therefore, in the upgrade process, inbound and outbound traffic of the distributed system cannot be interrupted. The MB operates in an active-standby mode, and the traffic interruption issues can be avoided via switchover. Specifically, when the MB needs to be upgraded, the distributed network system first resets and upgrades a standby MB while an active MB continues to handle inbound and outbound traffic. After the standby MB is updated, the distributed network system resets the active MB; the standby MB becomes the active MB and handles inbound and outbound traffic. In this way, the update of the active MB is completed. However, in a process of upgrading an operating system of the LCs, services on the LCs are interrupted, degrading user experience.

### SUMMARY

This application provides a communication system, a method for updating an operating system, and a line card. An NP on the line card and another line card are used to forward an upward packet, without interrupting transmission of the upward packet, thereby improving user experience.

A first aspect of this application provides a communication system. The communication system includes a main board, a first line card, and a second line card. The main board is configured to send a first forwarding information base to the first line card. The first line card includes a network processor (network processor, NP) and a central processing unit (central processing unit, CPU). The NP is configured to receive the first forwarding information base and replace a second forwarding information base. The NP is further configured to: receive a first upward packet, and forward the first upward packet to the second line card based on the first forwarding information base. The second line card is configured to forward the first upward packet to the main board. The first line card is configured to update an operating system of the CPU. After the operating system is updated, the first line card is configured to: receive a second upward packet by using the NP, and forward the second upward packet to the main board based on the second forwarding information base and an updated operating system.

In an optional manner of the first aspect, the main board is further configured to: obtain a first downward packet based on the first upward packet, and send the first downward packet to the second line card. The second line card is further configured to forward the first downward packet to the first line card. The first line card is further configured to send the first downward packet by using the NP. In this application, an NP on a line card and another line card are used to forward a downward packet, so that transmission of the downward packet does not need to be interrupted, thereby improving user experience.

In an optional manner of the first aspect, the first line card is further configured to: receive a first terminal packet by using the NP, and forward the first terminal packet to the second line card based on the first forwarding information base. The second line card is configured to handle the first terminal packet. In an actual application, when the first line card cannot normally process the terminal packet, transmission of the upward packet and the downward packet may be affected. For example, monitoring is kept between the first line card and a peer router by using a heartbeat packet. When the heartbeat packet cannot be normally transmitted, a service between the first line card and the peer router is interrupted. In this application, an NP on a line card and another line card are used to process a terminal packet, so that a service does not need to be interrupted, thereby improving user experience.

In an optional manner of the first aspect, that the second line card is configured to handle the first terminal packet includes: The second line card is configured to: obtain a first reply packet based on the first terminal packet, and send the first reply packet to the first line card. The first line card is further configured to send the first reply packet by using the NP. In this application, an NP on a line card and another line card are used to process a terminal packet, so that a service does not need to be interrupted, thereby improving user experience.

In an optional manner of the first aspect, after the first line card updates the operating system, the NP is further configured to: receive a second terminal packet, and forward the second terminal packet to the CPU based on the second forwarding information base. The CPU is configured to handle the second terminal packet. Processing permission of the terminal packet is returned to the CPU of the first line card, so that data processing efficiency can be improved.

In an optional manner of the first aspect, the first line card is further configured to update a process of the CPU. That the NP is configured to forward the second upward packet to the main board based on the second forwarding information base and the updated operating system includes: After the operating system and the process are updated, the NP is configured to forward the second upward packet to the main board based on the second forwarding information base, an updated process, and the updated operating system. In an actual application, the first line card may update the process by using an active-standby mode of the process. However, the active-standby mode consumes a large quantity of processing resources. By updating the process in a process of updating the operating system, processing resources of the line card can be saved.

In an optional manner of the first aspect, after the operating system is updated, the main board is further configured to send the second forwarding information base to the first line card. The NP is further configured to receive the second forwarding information base and replace the first forwarding information base. In an actual application, an additional memory may be disposed on the first line card to store the second forwarding information base, and the additional memory is not reset due to an update of the operating system, so that the second forwarding information base is retrieved again after the operating system is updated. However, the additional memory increases costs of the first line card. In this application, the main board resends the second forwarding information base, so that costs of the first line card can be reduced.

A second aspect of this application provides a method for updating an operating system. The method for updating an operating system is applied to a first line card. The method for updating an operating system includes the following steps: The first line card receives a first forwarding information base by using an NP and replaces a second forwarding information base. The first line card receives a first upward packet by using the NP, and forwards the first upward packet to a second line card based on the first forwarding information base, where the second line card is configured to forward the first upward packet to a main board. The first line card updates an operating system of a CPU. The first line card receives a second upward packet by using the NP, and forwards the second upward packet to the main board based on the second forwarding information base and an updated operating system.

In an optional manner of the second aspect, before updating the operating system, the method for updating an operating system further includes the following steps: The first line card receives a first downward packet from the second line card by using the NP, where the first downward packet is obtained based on the first upward packet. The first line card sends the first downward packet by using the NP.

In an optional manner of the second aspect, before updating the operating system, the method for updating an operating system further includes the following steps: The first line card receives a first terminal packet by using the NP, and forwards the first terminal packet to the second line card based on the first forwarding information base. The first line card receives a first reply packet from the second line card by using the NP, where the first reply packet is obtained based on the first terminal packet. The first line card sends the first reply packet by using the NP.

In an optional manner of the second aspect, after updating the operating system, the method for updating an operating system further includes the following steps: The first line card receives a second terminal packet by using the NP, and forwards the second terminal packet to the CPU based on the second forwarding information base. The first line card processes the second terminal packet by using the CPU.

In an optional manner of the second aspect, the method for updating an operating system further includes the following steps: The first line card updates a process of the CPU. That the first line card forwards the second upward packet to the main board based on the second forwarding information base and the updated operating system includes: The first line card forwards the second upward packet to the main board based on the second forwarding information base, an updated process, and the updated operating system.

In an optional manner of the second aspect, after updating the operating system, the method for updating an operating system further includes the following step: The first line card receives the second forwarding information base from the main board and replaces the first forwarding information base.

A third aspect of this application provides a line card. The line card includes an NP and a CPU. The NP is configured to receive a first forwarding information base and replace a second forwarding information base. The NP is further configured to: receive a first upward packet, and forward the first upward packet to a second line card based on the first forwarding information base. The second line card is configured to forward the first upward packet to a main board. The CPU is configured to update an operating system. The NP is further configured to: receive a second upward packet, and forward the second upward packet to the main board based on the second forwarding information base and an updated operating system.

In an optional manner of the third aspect, before the operating system is updated, the NP is further configured to receive a first downward packet from the second line card, where the first downward packet is obtained based on the first upward packet. The NP is further configured to send the first downward packet.

In an optional manner of the third aspect, before the operating system is updated, the NP is further configured to: receive a first terminal packet, and forward the first terminal packet to the second line card based on the first forwarding information base. The NP is further configured to receive a first reply packet from the second line card. The first reply packet is obtained based on the first terminal packet. The NP is further configured to send the first reply packet.

In an optional manner of the third aspect, after the operating system is updated, the NP is further configured to: receive a second terminal packet, and forward the second terminal packet to the CPU based on the second forwarding information base. The CPU is further configured to handle the second terminal packet.

In an optional manner of the third aspect, the CPU is further configured to update a process. That the NP is configured to forward the second upward packet to the main board based on the second forwarding information base and the updated operating system includes: After the operating system and the process are updated, the NP is configured to forward the second upward packet to the main board based on the second forwarding information base, an updated process, and the updated operating system.

In an optional manner of the third aspect, after the operating system is updated, the NP is further configured to receive the second forwarding information base from the main board and replace the first forwarding information base.

A fourth aspect of this application provides a method for updating an operating system. The method for updating an operating system is applied to a main board. The method for updating an operating system includes the following steps: The main board sends a first forwarding information base to a first line card. The first forwarding information base is used to replace a second forwarding information base. The first line card includes a CPU and an NP. The first forwarding information base is used by the NP to forward a received first upward packet to a second line card. The second line card is configured to forward the first upward packet to the main board. The main board is configured to receive the first upward packet. The first line card is configured to update an operating system of the CPU. After the operating system is updated, the first line card is configured to: receive a second upward packet by using the NP, and forward the second upward packet to the main board based on the second forwarding information base and an updated operating system. The main board is configured to receive the second upward packet.

It should be understood that descriptions of the fourth aspect are similar to descriptions of the first aspect or any optional manner of the first aspect. Therefore, for the descriptions of the fourth aspect, refer to the descriptions of the first aspect or any optional manner of the first aspect. For example, the method for updating an operating system includes the following steps: After the operating system is updated, the main board sends the second forwarding information base to the first line card. For another example, the method for updating an operating system includes the following steps: The main board obtains a first downward packet based on the first upward packet, and sends the first downward packet to the second line card. The second line card is further configured to forward the first downward packet to the first line card. The first line card is further configured to send the first downward packet by using the NP.

A fifth aspect of this application provides a main board. The main board includes a transmitter and a receiver. The transmitter is configured to send a first forwarding information base to a first line card. The first forwarding information base is used to replace a second forwarding information base. The first line card includes a CPU and an NP. The first forwarding information base is used by the NP to forward a received first upward packet to a second line card. The second line card is configured to forward the first upward packet to the main board. The receiver is configured to receive the first upward packet. The first line card is configured to update an operating system of the CPU. After the operating system is updated, the first line card is configured to: receive a second upward packet by using the NP, and forward the second upward packet to the main board based on the second forwarding information base and an updated operating system. The receiver is further configured to receive the second upward packet.

A sixth aspect of this application provides a main board. The main board includes a sending module and a receiving module. The sending module is configured to send a first forwarding information base to a first line card. The first forwarding information base is used to replace a second forwarding information base. The first line card includes a CPU and an NP. The first forwarding information base is used by the NP to forward a received first upward packet to a second line card. The second line card is configured to forward the first upward packet to the main board. The receiving module is configured to receive the first upward packet. The first line card is configured to update an operating system of the CPU. After the operating system is updated, the first line card is configured to: receive a second upward packet by using the NP, and forward the second upward packet to the main board based on the second forwarding information base and an updated operating system. The receiving module is further configured to receive the second upward packet.

It should be understood that descriptions of the fifth aspect or the sixth aspect are similar to descriptions of the fourth aspect. Therefore, for the descriptions of the fifth aspect or the sixth aspect, refer to the descriptions of the fourth aspect.

A seventh aspect of this application provides a method for updating an operating system. The method for updating an operating system is applied to a second line card. The method for updating an operating system includes the following step: The second line card receives a first upward packet from a first line card. The first line card includes a CPU and an NP. The first upward packet is forwarded by the NP to the first line card based on a first forwarding information base. The second line card forwards the first upward packet to a main board. The first line card is configured to update an operating system of the CPU. After the operating system is updated, the first line card is configured to: receive a second upward packet by using the NP, and forward the second upward packet to the main board based on a second forwarding information base and an updated operating system.

It should be understood that descriptions of the seventh aspect are similar to the descriptions of the first aspect or any optional manner of the first aspect. Therefore, for the descriptions of the seventh aspect, refer to the descriptions of the first aspect or any optional manner of the first aspect. For example, the method for updating an operating system further includes the following step: The second line card receives a first downward packet from the main board. The first downward packet is obtained based on the first upward packet. The second line card forwards the first downward packet to the first line card. The first line card is configured to send the first downward packet by using the NP. For another example, the method for updating an operating system further includes the following step: The second line card receives a first terminal packet from the first line card. The first terminal packet is forwarded by the NP to the first line card based on the first forwarding information base. The second line card processes the first terminal packet.

An eighth aspect of this application provides a line card. The line card includes a receiver and a transmitter. The receiver is configured to receive a first upward packet from a first line card. The first line card includes a CPU and an NP. The first upward packet is forwarded by the NP to the first line card based on a first forwarding information base. The transmitter is configured to forward the first upward packet to a main board. The first line card is configured to update an operating system of the CPU. After the operating system is updated, the first line card is configured to: receive a second upward packet by using the NP, and forward the second upward packet to the main board based on a second forwarding information base and an updated operating system.

A ninth aspect of this application provides a line card. The line card includes a receiving module and a sending module. The receiving module is configured to receive a first upward packet from a first line card. The first line card includes a CPU and an NP. The first upward packet is forwarded by the NP to the first line card based on a first forwarding information base. The sending module is configured to forward the first upward packet to a main board. The first line card is configured to update an operating system of the CPU. After the operating system is updated, the first line card is configured to: receive a second upward packet by using the NP, and forward the second upward packet to the main board based on a second forwarding information base and an updated operating system.

It should be understood that descriptions of the eighth aspect or the ninth aspect are similar to the descriptions of the seventh aspect. Therefore, for the descriptions of the eighth aspect or the ninth aspect, refer to the descriptions of the seventh aspect.

### BRIEF DESCRIPTION OF DRAWINGS

FIG. 1a is a diagram of a first structure of a communication system according to an embodiment of this application;
FIG. 1b is a diagram of a second structure of a communication system according to an embodiment of this application;
FIG. 2a is a diagram of a third structure of a communication system according to an embodiment of this application;
FIG. 2b is a diagram of a fourth structure of a communication system according to an embodiment of this application;
FIG. 3a is a diagram of a fifth structure of a communication system according to an embodiment of this application;
FIG. 3b is a diagram of a sixth structure of a communication system according to an embodiment of this application;
FIG. 4 is a schematic flowchart of a method for updating an operating system according to an embodiment of this application; and
FIG. 5 is a diagram of a structure of a line card according to an embodiment of this application.

### DESCRIPTION OF EMBODIMENTS

This application provides a communication system, a method for updating an operating system, and a line card. An NP on the line card and another line card are used to forward an upward packet with interrupting transmission of the upward packet, thereby improving user experience. It should be understood that "first", "second", and the like used in this application are merely used for distinguishing and description, but should not be understood as any indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The following describes terms in this application.

Upward packet: A packet received by a communication system that needs to be forwarded to an application program on an internal main board (main board, MB) for handling.

Downward packet: A packet sent by an MB to an external system.

Terminal packet: A packet received by a communication system that needs to be forwarded to an application program on an internal line card (line card, LC) for handling.

Reply packet: A packet sent by an LC to an external system.

Forwarding information base: A path entry that controls a packet to be forwarded from an NP of a line card to an NP of another line card or directly forwarded to a CPU of the line card.

A distributed network system generally includes a main board and a plurality of line cards. To improve user experience, the distributed network system needs to make upgrading imperceptible to external users. Therefore, in the upgrade process, inbound and outbound traffic of the network distributed system cannot be interrupted. The main board operates in an active-standby mode, and the traffic interruption issues can be avoided via switchover. However, in a process of upgrading an operating system of the LCs, services on the LCs are interrupted, degrading user experience.

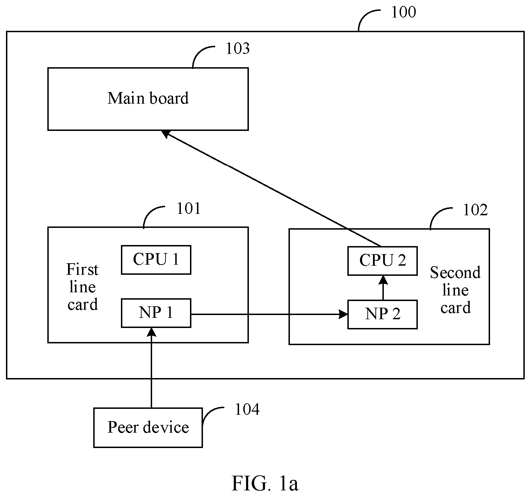

In view of this, this application provides a communication system. FIG. 1a is a diagram of a first structure of a communication system according to an embodiment of this application. As shown in FIG. 1a, the communication system 100 includes a main board 103, a first line card 101, and a second line card 102. The main board 103 is separately connected to the first line card 101 and the second line card 102. A connection manner may be an optical fiber, an electrical transmission line, or the like. There is an interface for communication between the first line card 101 and the second line card 102. The first line card 101 includes a network processor (network processor, NP) 1 and a central processing unit (central processing unit, CPU) 1. The second line card 102 includes a network processor (network processor, NP) 2 and a central processing unit (central processing unit, CPU) 2. The main board 103 is configured to communicate with a peer device 104 outside the system by using the first line card 101. The peer device 104 may be a router, a gateway device, a server, or the like. The following separately describes functions of components in the communication system in an upgrade process by using an example in which an operating system on the first line card 101 is upgraded.

The main board 103 is configured to send a first forwarding information base to the first line card 101. The first forwarding information base is used to control a forwarding route of a packet. In an actual application, the main board 103 may be further configured to send an update instruction to the first line card 101. The first line card 101 updates the operating system based on the update instruction. The update instruction may carry the first forwarding information base.

The CPU 1 in the first line card 101 is configured to: receive the first forwarding information base from the main board 103, and deliver the first forwarding information base to the NP 1. A second forwarding information base is configured on the NP 1. The NP 1 forwards a received upward packet to the main board 103 by using the second forwarding information base. After receiving the first forwarding information base, the NP 1 is configured to replace the second forwarding information base with the first forwarding information base. The NP 1 in the first line card 101 is further configured to: receive a first upward packet from the peer device 104, and forward the first upward packet to the second line card 102 based on the first forwarding information base.

The NP 2 in the second line card 102 is configured to receive the first upward packet from the first line card 101. The second line card 102 is configured to forward the first upward packet to the main board 103. For example, in the example in FIG. 1a, the NP 2 in the second line card 102 is configured to forward the first upward packet to the CPU 2. The CPU 2 is configured to forward the first upward packet to the main board 103. In an actual application, the second line card 102 may forward the upward packet from the NP 1 to the main board 103 by default, or the main board 103 configures the second line card 102, so that the second line card 102 forwards the upward packet from the NP 1 to the main board 103.

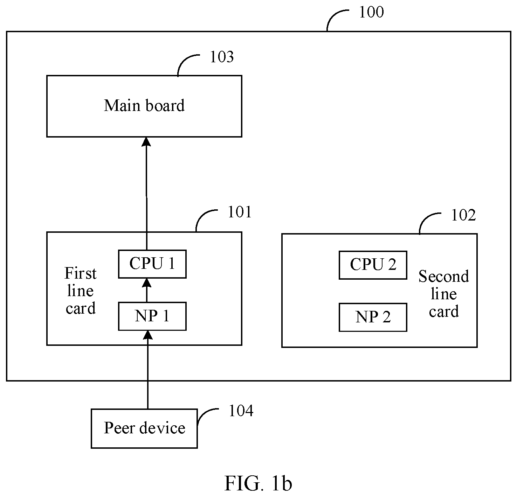

The first line card 101 updates the operating system of the CPU 1. The first line card 101 may obtain an update file from the main board 103 by using the CPU 1 before the update, or obtain the update file from a network by using the NP 1. A manner in which the first line card 101 obtains the update file is not limited in this embodiment of this application. After receiving the update instruction and replacing the second forwarding information base with the first forwarding information base, the first line card 101 updates the operating system of the CPU 1. In a process of updating the operating system, the NP 1 in the first line card 101 is not reset, to ensure normal transmission of a service. After the operating system is updated, the first line card 101 is configured to: receive a second upward packet from the peer device 104, and forward the second upward packet to the main board 103 based on the second forwarding information base. FIG. 1b is a diagram of a second structure of a communication system according to an embodiment of this application. As shown in FIG. 1b, after the operating system is updated, the NP 1 in the first line card 101 is configured to forward the second upward packet to the CPU 1 based on the second forwarding information base. The CPU 1 is configured to forward the second upward packet to the main board 103.

In this embodiment of this application, the NP 1 in the first line card 101 is not reset in the process of updating the operating system, forwards the first upward packet to the second line card 102, and then forwards the upward packet to the main board 103 by using the second line card 102. Therefore, in this embodiment of this application, in the process of updating the operating system of the first line card 101, transmission of the upward packet does not need to be interrupted, thereby improving user experience.

It should be understood that FIG. 1a and FIG. 1b are merely two examples of the communication system according to embodiments of this application. In an actual application, a person skilled in the art may adaptively modify the structure of the communication system as required. For example, in the examples in FIG. 1a and FIG. 1b, the communication system 100 includes one main board and two line cards. In an actual application, the communication system 100 may include more main boards or more line cards. For another example, in the example in FIG. 1a, the main board 103 is further configured to communicate with another peer device by using the second line card 102, or the communication system 100 further includes another main board, and the another main board is further configured to communicate with another peer device by using the second line card 102.

In an actual application, an operating system on the second line card 102 may also need to be updated. Therefore, after the operating system on the first line card 101 is updated, the operating system on the second line card 102 may be updated by using a similar method. In an update process, the main board receives an upward packet by using the NP 2 and the first line card 101.

When the communication system 100 includes more line cards, the line cards in the communication system 100 are divided into a group 1 and a group 2. When a quantity of line cards in the group 1 is the same as a quantity of line cards in the group 2, a plurality of line cards in the group 1 are in one-to-one correspondence with a plurality of line cards in the group 2. The first line card 101 and the second line card 102 in FIG. 1a are corresponding line cards. Another corresponding line card may update an operating system of the line card in the foregoing manner. When a quantity of line cards in the group 1 is different from a quantity of line cards in the group 2, the second line card 101 has a plurality of corresponding line cards. For example, the plurality of line cards include the first line card 101 and a third line card. In a process in which the first line card 101 and the third line card update operating systems, the second line card 101 is configured to forward, to the main board, an upward packet from the first line card 101 and the third line card.

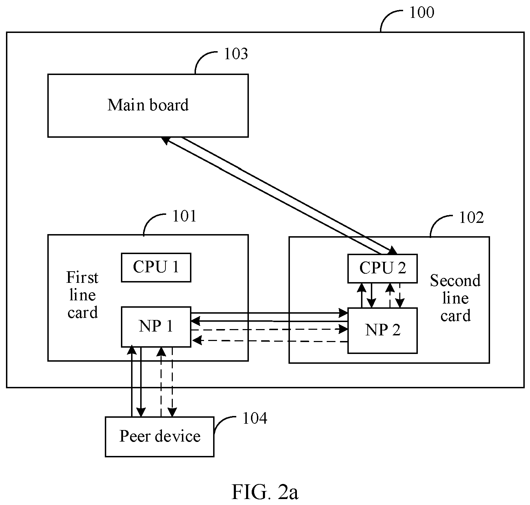

In the embodiment in FIG. 1a, the main board 103 is configured to receive the first upward packet from the second line card 102. The main board 103 is configured to process the first upward packet. For example, the main board 103 is configured to obtain a first downward packet based on the first upward packet. The main board 103 sends the first downward packet to the peer device 104 by using the second line card 102 and the first line card 101. This is described below. FIG. 2a is a diagram of a third structure of a communication system according to an embodiment of this application. As shown in FIG. 2a, based on FIG. 1a, the main board 103 is configured to transmit the first downward packet to the second line card 102. Solid lines in FIG. 2a represent the first upward packet and the first downward packet. The CPU 2 in the second line card 102 is configured to: receive the first downward packet, and forward the first downward packet to the NP 2. The NP 2 is configured to forward the first downward packet to the NP 1. The NP 1 is configured to send the first downward packet to the peer device 104.

In an actual application, in a process in which the main board 103 communicates with the peer device 104 by using the first line card 101, the first line card 101 may further need to process a terminal packet, for example, process a border gateway protocol (border gateway protocol, BGP) packet, a bidirectional forwarding detection (bidirectional forwarding detection, BFD) packet, or an open shortest path first protocol (open shortest path first protocol, OSPF) packet. A corresponding process needs to run on the CPU 1 in the first line card 101 to process a corresponding terminal packet. For example, an OSPF process runs on the CPU 1. The OSPF process is used to process the OSPF packet. In a process in which the first line card 101 updates the operating system, the first line card 101 cannot normally process the terminal packet. Consequently, a service may be interrupted. Therefore, in an actual application, the first line card 101 may alternatively process the terminal packet by using the second line card 102. This is described below.

As shown in FIG. 2a, the NP 1 in the first line card 101 is further configured to: receive a first terminal packet from the peer device 104, and forward the first terminal packet to the second line card 102 based on the first forwarding information base. The second line card 102 is configured to handle the first terminal packet. In the example in FIG. 2a, the NP 2 in the second line card 102 is configured to: receive the first terminal packet from the NP 1, and forward the first terminal packet to the CPU 2. A process for processing the first terminal packet runs on the CPU 2. For example, the CPU 2 is configured to: generate a first reply packet based on the first terminal packet, and transmit the first reply packet to the NP 2. In FIG. 2a, dashed lines represent the first reply packet and the first terminal packet. The NP 2 is configured to transmit the first reply packet to the first line card 101. The NP 1 in the first line card 101 is configured to: receive the first reply packet from the second line card 102, and send the first reply packet to the peer device 104.

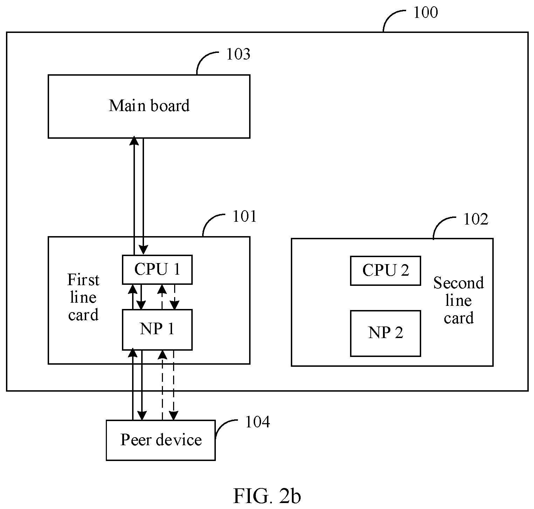

In the embodiment in FIG. 1b, the main board 103 is configured to receive the first upward packet from the first line card 101. The main board 103 is configured to process the first upward packet. For example, the main board 103 is configured to obtain the first downward packet based on the first upward packet. The main board 103 sends the first downward packet to the peer device 104 by using the first line card 101. This is described below. FIG. 2b is a diagram of a fourth structure of a communication system according to an embodiment of this application. As shown in FIG. 2b, based on FIG. 1b, the main board 103 is configured to transmit the first downward packet to the first line card 101. Solid lines in FIG. 2b represent the first upward packet and the first downward packet. The CPU 2 in the second line card 102 is configured to: receive the first downward packet, and forward the first downward packet to the NP 2. The NP 2 is configured to forward the first downward packet to the NP 1. The NP 1 is configured to send the first downward packet to the peer device 104.

In an actual application, in a process in which the main board 103 communicates with the peer device 104 by using the first line card 101, the first line card 101 may further need to process a terminal packet. A corresponding process needs to run on the CPU 1 in the first line card 101 to process a corresponding terminal packet. After the first line card 101 updates the operating system, the first line card 101 processes the terminal packet by using the CPU 1. This is described below.

As shown in FIG. 2b, the NP 1 in the first line card 101 is further configured to: receive the first terminal packet from the peer device 104, and forward the first terminal packet to the CPU 1 based on the second forwarding information base. The CPU 1 is configured to handle the first terminal packet. For example, the CPU 1 is configured to: generate the first reply packet based on the first terminal packet, and transmit the first reply packet to the NP 1. In FIG. 2b, dashed lines represent the first reply packet and the first terminal packet. The NP 1 is configured to send the first reply packet to the peer device 104.

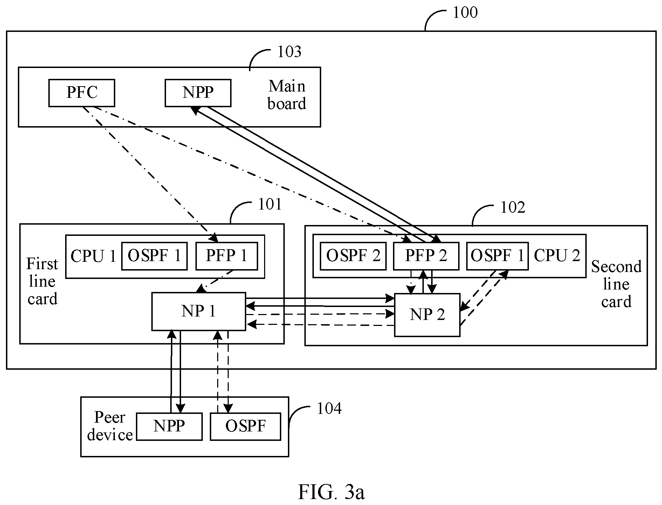

FIG. 3a is a diagram of a fifth structure of a communication system according to an embodiment of this application. As shown in FIG. 3a, based on FIG. 2a, an OSPF 1 process and a packet forward process (packet forward process, PFP) 1 process run on the CPU 1. A packet forwarding control (packet forwarding control, PFC) process and a network protocol process (network protocol process, NPP) process run on the main board 103. An OSPF 2 process, a PFP 2 process, and an OSPF 1 process run on the CPU 2. An NPP process and an OSPF process run on the peer device 104. The following describes functions of each process and structure before and after the update.

Before the first line card 101 updates the operating system, the PFC process of the main board 103 sends the first forwarding information base to the first line card 101. The PFP 1 process running on the CPU 1 is used to: process the first forwarding information base, and deliver the first forwarding information base to the NP 1. The NP 1 is configured to replace the second forwarding information base with the first forwarding information base. The PFC process of the main board 103 sends a third forwarding information base to the second line card 102. The PFP 2 process running on the CPU 2 is used to: process the third forwarding information base, and deliver the third forwarding information base to the NP 2. The NP 2 is configured to make the third forwarding information base take effect.

When the first line card 101 updates the operating system, the NPP process of the peer device 104 is used to send the first upward packet to the first line card 101. The OSPF process of the peer device 104 is used to send the first terminal packet to the first line card 101. The NP 1 is configured to forward the first upward packet and the first terminal packet to the second line card 102 based on the first forwarding information base. The NP 2 is configured to forward the first terminal packet to the OSPF 1 process of the CPU 2 based on the third forwarding information base. The OSPF 1 process is used to: process the first terminal packet to obtain the first reply packet, and transmit the first reply packet to the NP 2. The NP 2 is configured to forward the first upward packet to the PFP 2 process of the CPU 2. The PFP 2 process is used to forward the first upward packet to the main board 103. The NPP process of the main board 103 is used to: process the first upward packet to obtain the first downward packet, and transmit the first downward packet to the second line card 102. The PFP 2 process is used to: process the first downward packet, and forward the first downward packet to the NP 2. The NP 2 is configured to forward the first downward packet and the first reply packet to the first line card 101 based on the third forwarding information base. The NP 1 is configured to send the first downward packet and the first reply packet to the peer device 104. The NPP process of the peer device 104 is used to process the first downward packet. The OSPF process of the peer device 104 is used to process the first reply packet.

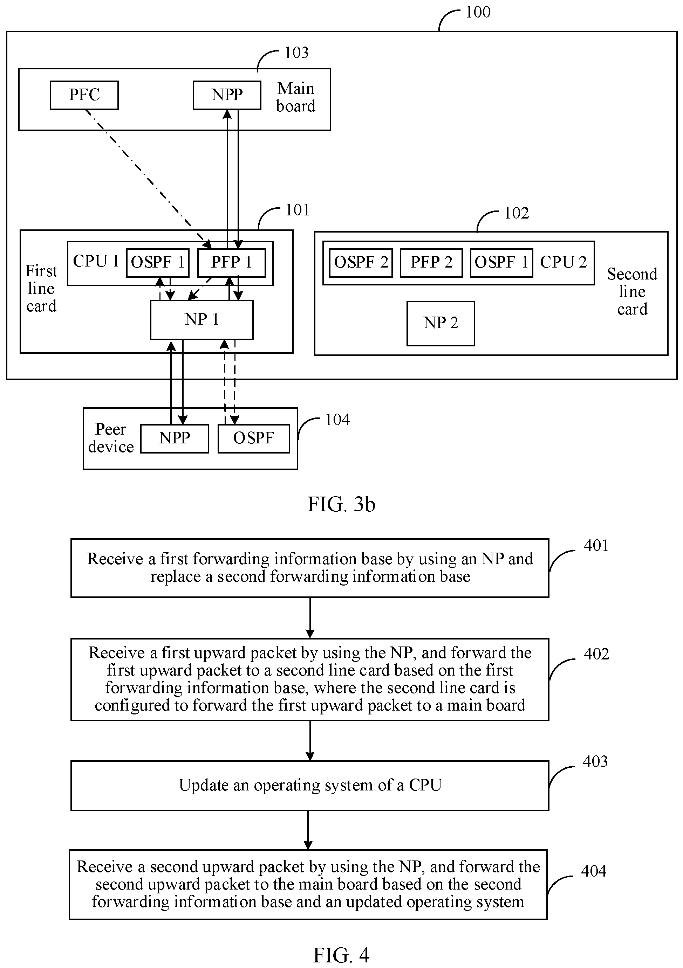

FIG. 3b is a diagram of a sixth structure of a communication system according to an embodiment of this application. As shown in FIG. 3b, based on FIG. 3a, after the first line card 101 updates the operating system, the PFC process of the main board 103 is used to send the second forwarding information base to the first line card 101. The PFP 1 process of the first line card 101 is used to: process the second forwarding information base, and deliver the second forwarding information base to the NP 1. The NP 1 is configured to replace the first forwarding information base with the second forwarding information base. The NPP process of the peer device 104 is used to send the second upward packet to the first line card 101. The OSPF process of the peer device 104 is used to send a second terminal packet to the first line card 101. The NP 1 is configured to forward the second upward packet and the second terminal packet to the CPU 1 based on the second forwarding information base. The OSPF 1 process of the CPU 1 is used to: handle the second terminal packet to obtain a second reply packet, and transmit the second reply packet to the NP 2. The PFP 1 process of the CPU 1 is used to forward the second upward packet to the main board 103. The NPP process of the main board 103 is used to: process the second upward packet to obtain a second downward packet, and transmit the second downward packet to the first line card 101. The PFP 1 process is used to: process the second downward packet, and forward the second downward packet to the NP 1. The NP 2 is configured to send the second downward packet and the second reply packet to the peer device 104. The NPP process of the peer device 104 is used to process the second downward packet. The OSPF process of the peer device 104 is used to process the second reply packet.

In the foregoing FIG. 3a and FIG. 3b, the OSPF 2 process of the CPU 2 may be used to process the terminal packet of the second line card 102. For example, the main board 103 is further configured to communicate with another peer device by using the second line card 102. The OSPF 2 process is used to: process a terminal packet from the another peer device to obtain a reply packet, and send the reply packet to the another peer device by using the NP 2. In FIG. 3b, after the operating system of the CPU 1 is updated, the OSPF 1 process of the CPU 2 may be stopped.

In the foregoing examples in FIG. 1a to FIG. 3b, the first line card 101 is configured to update the operating system of the CPU 1. In an actual application, the first line card 101 may be further configured to update the process of the CPU 1. For example, in the example of FIG. 3b, before the update, the process of the CPU 1 includes the PFP 1 process. After the update, the PFP 1 process is updated to a PFP 3 process. The CPU 1 transmits the second upward packet to the main board 103 by using the PFP 3 process, and receives the second downward packet from the main board 103 by using the PFP 3 process.

In the examples in FIG. 1b, FIG. 2b, and FIG. 3b, after the operating system of the CPU 1 is updated, the first line card 101 may update the NP in an active-standby NP manner. Specifically, the first line card 101 is configured with an active NP 1 and a standby NP 1, and forwards a packet by using the standby NP 1, for example, forwards the second upward packet. The first line card 101 updates the active NP 1. After the active NP 1 is updated, the first line card 101 forwards a packet by using an updated active NP 1.

The foregoing describes the communication system provided in this application, and the following describes a method for updating an operating system and a line card provided in this application. FIG. 4 is a schematic flowchart of a method for updating an operating system according to an embodiment of this application. As shown in FIG. 4, the method for updating an operating system includes the following steps.

In step 401, a first line card receives a first forwarding information base by using an NP, and replaces a second forwarding information base.

The first line card includes the NP and a CPU. The second forwarding information base is used to control the NP to forward a received upward packet to the CPU. The first line card receives the first forwarding information base. For example, the first line card receives the first forwarding information base from a main board. The first line card may further receive an update instruction from the main board. The first line card updates the operating system based on the update instruction. The update instruction may carry the first forwarding information base. The first line card configures the first forwarding information base to replace the second forwarding information base.

In step 402, the first line card receives a first upward packet by using the NP, and forwards the first upward packet to a second line card based on the first forwarding information base, where the second line card is configured to forward the first upward packet to the main board.

The first line card receives the first upward packet from a peer device by using the NP. The peer device 104 may be a router, a gateway device, a server, or the like. The NP forwards the first upward packet to the second line card based on the first forwarding information base. The second line card is configured to forward the first upward packet to the main board. For example, the second line card includes an NP 2 and a CPU 2. The NP 2 is configured to: receive the first upward packet from the first line card, and forward the first upward packet to the CPU 2. The CPU 2 is configured to forward the first upward packet to the main board.

In step 403, the first line card updates the operating system of the CPU.

The first line card updates the operating system of the CPU. The first line card may obtain an update file from the main board by using the CPU before the update, or obtain the update file from a network by using the NP. A manner in which the first line card obtains the update file is not limited in this embodiment of this application. After receiving the update instruction and replacing the second forwarding information base with the first forwarding information base, the first line card updates the operating system of the CPU. In a process of updating the operating system, the NP in the first line card is not reset, to ensure normal transmission of a service.

In step 404, the first line card receives a second upward packet by using the NP, and forwards the second upward packet to the main board based on the second forwarding information base and an updated operating system.

After the operating system is updated, the first line card receives the second upward packet from the peer device, and forwards the second upward packet to the main board based on the second forwarding information base. For example, after the operating system is updated, the NP in the first line card is configured to forward the second upward packet to the CPU based on the second forwarding information base. The CPU is configured to forward the second upward packet to the main board.

It should be understood that descriptions of the method for updating an operating system are similar to the descriptions of the foregoing communication system. Therefore, for the descriptions of the method for updating an operating system, refer to the foregoing descriptions in any one of FIG. 1a to FIG. 3b. For example, before the operating system is updated, the method for updating an operating system further includes the following steps: The first line card receives a first downward packet from the second line card by using the NP, where the first downward packet is obtained based on the first upward packet, and the first line card sends the first downward packet to the peer device by using the NP. For another example, before the operating system is updated, the method for updating an operating system further includes the following steps: The first line card receives a first terminal packet by using the NP, and forwards the first terminal packet to the second line card based on the first forwarding information base. The first line card receives a first reply packet from the second line card by using the NP, where the first reply packet is obtained based on the first terminal packet, and the first line card sends the first reply packet to the peer device by using the NP.

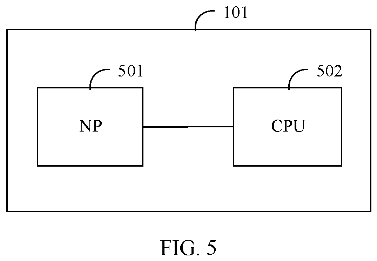

FIG. 5 is a diagram of a structure of a line card according to an embodiment of this application. As shown in FIG. 5, a line card 101 includes an NP 501 and a CPU 502. The NP 501 is configured to receive a first forwarding information base and replace a second forwarding information base. The NP 501 is further configured to: receive a first upward packet, and forward the first upward packet to a second line card based on the first forwarding information base. The second line card is configured to forward the first upward packet to a main board. The CPU 502 is configured to update an operating system. The NP 501 is further configured to: receive a second upward packet, and forward the second upward packet to the main board based on the second forwarding information base and an updated operating system.

It should be understood that, there is a similarity between descriptions of the line card 101 in FIG. 5 and the descriptions of that in any one of FIG. 1a to FIG. 3b. Therefore, for the descriptions of the line card 101 in FIG. 5, refer to the descriptions of that in any one of FIG. 1a to FIG. 3b. For example, for the NP 501, refer to the descriptions of the NP 1, and for the CPU 502, refer to the descriptions of the CPU 1. For another example, the NP 501 is further configured to receive a first downward packet from the second line card, where the first downward packet is obtained based on the first upward packet. The NP 501 is further configured to send the first downward packet.

In another embodiment, the line card 101 may further include a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store the first forwarding information base.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. A communication system, comprising a main board, a first line card, and a second line card, wherein
the main board is configured to send a first forwarding information base to the first line card;
the first line card comprises a network processor NP and a central processing unit CPU, wherein the NP is configured to receive the first forwarding information base and replace a second forwarding information base, and the NP is further configured to: receive a first upward packet and forward the first upward packet to the second line card based on the first forwarding information base;
the second line card is configured to forward the first upward packet to the main board; and
the first line card is configured to update an operating system of the CPU, and after the operating system is updated, the first line card is configured to: receive a second upward packet by using the NP, and forward the second upward packet to the main board based on the second forwarding information base and an updated operating system.

2. The communication system according to claim 1, wherein
the main board is further configured to: obtain a first downward packet based on the first upward packet, and send the first downward packet to the second line card;
the second line card is further configured to forward the first downward packet to the first line card; and
the first line card is further configured to send the first downward packet by using the NP.

3. The communication system according to claim 1 or 2, wherein
the first line card is further configured to: receive a first terminal packet by using the NP, and forward the first terminal packet to the second line card based on the first forwarding information base; and
the second line card is configured to handle the first terminal packet.

4. The communication system according to claim 3, wherein
that the second line card is configured to handle the first terminal packet comprises: the second line card is configured to: obtain a first reply packet based on the first terminal packet, and send the first reply packet to the first line card; and
the first line card is further configured to send the first reply packet by using the NP.

5. The communication system according to claim 3 or 4, wherein
after the first line card updates the operating system, the NP is further configured to: receive a second terminal packet, and forward the second terminal packet to the CPU based on the second forwarding information base; and
the CPU is configured to handle the second terminal packet.

6. The communication system according to any one of claims 1 to 5, wherein the first line card is further configured to update a process of the CPU; and
that the NP is configured to forward the second upward packet to the main board based on the second forwarding information base and the updated operating system comprises: after the operating system and the process are updated, the NP is configured to forward the second upward packet to the main board based on the second forwarding information base, an updated process, and the updated operating system.

7. The communication system according to any one of claims 1 to 6, wherein
after the first line card updates the operating system, the main board is further configured to send the second forwarding information base to the first line card; and
the NP is further configured to receive the second forwarding information base and replace the first forwarding information base.

8. A method for updating an operating system, comprising:
receiving a first forwarding information base by using a network processor NP, and replacing a second forwarding information base;
receiving a first upward packet by using the NP, and forwarding the first upward packet to a second line card based on the first forwarding information base, wherein the second line card is configured to forward the first upward packet to a main board;
updating an operating system of a central processing unit CPU; and
after the operating system is updated, receiving a second upward packet by using the NP, and forwarding the second upward packet to the main board based on the second forwarding information base and an updated operating system.

9. The method for updating an operating system according to claim 8, wherein before updating the operating system, the method further comprises:
receiving a first downward packet from the second line card by using the NP, wherein the first downward packet is obtained based on the first upward packet; and
sending the first downward packet by using the NP.

10. The method for updating an operating system according to claim 8 or 9, wherein before updating the operating system, the method further comprises:
receiving a first terminal packet by using the NP, and forwarding the first terminal packet to the second line card based on the first forwarding information base;
receiving a first reply packet from the second line card by using the NP, wherein the first reply packet is obtained based on the first terminal packet; and
sending the first reply packet by using the NP.

11. The method for updating an operating system according to claim 10, wherein after updating the operating system, the method further comprises:
receiving a second terminal packet by using the NP, and forwarding the second terminal packet to the CPU based on the second forwarding information base; and
processing the second terminal packet by using the CPU.

12. The method for updating an operating system according to any one of claims 8 to 11, wherein the method further comprises:
updating a process of the CPU; and
the forwarding the second upward packet to the main board based on the second forwarding information base and the updated operating system comprises: forwarding the second upward packet to the main board based on the second forwarding information base, an updated process, and the updated operating system.

13. The method for updating an operating system according to any one of claims 8 to 12, wherein after updating the operating system, the method further comprises:
receiving the second forwarding information base from the main board, and replacing the first forwarding information base.

14. A line card, comprising a network processor NP and a central processing unit CPU, wherein
the NP is configured to receive a first forwarding information base and replace a second forwarding information base, the NP is further configured to: receive a first upward packet, and forward the first upward packet to a second line card based on the first forwarding information base, wherein the second line card is configured to forward the first upward packet to a main board;
the CPU is configured to update an operating system; and
the NP is further configured to: receive a second upward packet, and forward the second upward packet to the main board based on the second forwarding information base and an updated operating system.

15. The line card according to claim 14, wherein
before the operating system is updated, the NP is further configured to receive a first downward packet from the second line card, wherein the first downward packet is obtained based on the first upward packet, and the NP is further configured to send the first downward packet.

16. The line card according to claim 14 or 15, wherein
before the operating system is updated, the NP is further configured to: receive a first terminal packet, and forward the first terminal packet to the second line card based on the first forwarding information base, the NP is further configured to receive a first reply packet from the second line card, wherein the first reply packet is obtained based on the first terminal packet, and the NP is further configured to send the first reply packet.

17. The line card according to claim 16, wherein
after the operating system is updated, the NP is further configured to: receive a second terminal packet, and forward the second terminal packet to the CPU based on the second forwarding information base; and
the CPU is further configured to handle the second terminal packet.

18. The line card according to any one of claims 14 to 17, wherein
the CPU is further configured to update a process; and
that the NP is configured to forward the second upward packet to the main board based on the second forwarding information base and the updated operating system comprises:
after the operating system and the process are updated, the NP is configured to forward the second upward packet to the main board based on the second forwarding information base, an updated process, and the updated operating system.

19. The line card according to any one of claims 14 to 18, wherein
after the operating system is updated, the NP is further configured to receive the second forwarding information base from the main board and replace the first forwarding information base.
